# DEMANDE DE BREVET EUROPEEN

(11) **EP 3 701 834 A1**
(43) Date de publication de la demande: **02.09.2020**
(21) Numéro de dépôt: 20160117.6
(22) Date de dépôt: 28.02.2020
(51) Int. Cl.: A47B 3/10, A47B 85/06, A47J 37/07, F24C 3/14

(54) **ENSEMBLE PORTABLE MODULAIRE ET CONVERTIBLE POUR CUISINER EN PLEIN AIR**

(30) Priorité: 28.02.2019 FR 1902059
(71) Demandeur: JGRM, 33380 Mios (FR)
(72) Inventeur: RIBOT, Julien, 33380 Mios (FR); MATHIEU, Guillaume, 33380 Mios (FR)
(74) Mandataire: Ipside

(57) **Abrégé**

Ensemble de cuisine (100) portable comportant un poste fonctionnel (10), un couvercle (20) et des pieds (30), le poste fonctionnel comprenant un compartiment de cuisson (16), caractérisé en ce que le couvercle (20) est articulé sur le poste fonctionnel et est apte à pivoter entre une position ouverte, permettant un accès audit poste fonctionnel, et une position fermée, permettant de fermer ledit poste fonctionnel et de former une surface sensiblement horizontale servant de table, en ce que le poste fonctionnel (10) comprend au moins un compartiment de stockage (13) et ou de rangement (14, 15) délimité par des cloisons intérieures (12), et en ce que les pieds (30) sont amovibles ou rabattables.

## Description

### DOMAINE TECHNIQUE

La présente invention appartient au domaine des équipements multifonctions pour les activités de plein air, notamment des équipements portables permettant de stocker ou de cuisiner des aliments, et concerne plus particulièrement un ensemble portable, modulaire et convertible pour stocker, transporter et cuisiner en plein air des aliments.

### ÉTAT DE L'ART

Les activités de plein air, et surtout celles de groupe, nécessitent souvent un matériel approprié et un équipement spécial pour par exemple subvenir aux besoins en nourriture, que ce soit en repas ou en prises alimentaires légères.

En règle générale, la nourriture se conserve mal lorsqu'elle est emportée pendant des durées assez longues et dans des conditions météorologiques défavorables comme c'est le cas lors des randonnées. Les aliments frais ne supportent pas la chaleur et les aliments cuisinés refroidissent quelle que soit la température extérieure.

Pour améliorer la conservation des aliments dans ce contexte, on connait les contenants hermétiques et isothermes, tels que les boites ou les sacs isothermes, et les glacières par exemple. Ces contenants présentent cependant une efficacité très limitée.

Le document US 2018/0255911 décrit un chariot isolé thermiquement de forme similaire à celle d'un cartable ou d'une petite valise sur roulettes, ce chariot comprend des étages, séparés par des plateaux, et des cases dans chaque étage.

Des glacières électriques existent et permettent de prolonger la durée de conservation des aliments aussi longtemps que le permette l'autonomie de la batterie électrique utilisée. Toutefois, ces dispositifs électriques sont très énergivores et ne sont adaptés qu'aux aliments servis frais tels que les boissons fraiches.

En ce qui concerne les aliments chauds ou cuisinés, il existe des dispositifs de cuisson portables de type réchauds à gaz qui permettent de réchauffer les aliments ou de les cuire.

Par exemple, le document FR 2 529 997 divulgue un dispositif de cuisson au gaz pour camping à base de gaz liquéfié sous pression contenu dans une bouteille transportable.

Certains dispositifs de cuissons portables sont plus complets et comportent par exemple un coin grille en plus du réchaud traditionnel, comme le divulgue le document CN 206745241.

Au vu des contenants hermétiques et/ou isothermes existants et des dispositifs de cuisson portables existants, il est d'usage, lors d'une sortie en plein air, d'emporter ces deux dispositifs complémentaires, un contenant hermétique et un dispositif de cuisson portable, pour à la fois stocker et cuire les aliments.

Certaines solutions proposent de réunir ces deux dispositifs dans un seul ensemble, comme celui décrit dans le document US2018/0255911 et qui correspond à une boite de pique-nique multifonctionnelle. Cette solution ne correspond ni plus ni moins qu'à un simple artifice de rangement et la boite en question permet simplement de ranger une table pliable, un réchaud et d'autres ustensiles. Ensuite, lorsque la table est déployée, les différents éléments sont posés dessus de façon aléatoire. De plus, cette boite n'offre aucun espace de stockage des aliments.

Dans le domaine des cuisines portables, les solutions existantes sont pour la plupart d'usage très spécifique (atelier de cuisine en plein air) ou complètement farfelu, et concernent des structures modulaires transportables reproduisant des cuisines de grandes dimensions, dans les proportions d'une vraie cuisine.

### PRÉSENTATION DE L'INVENTION

La présente invention a pour but principal de pallier les limitations de l'art antérieur en proposant un dispositif de cuisine et de stockage facilement transportable, pour une utilisation dans différentes situations, modulaire, pour s'adapter aux besoins de chaque utilisateur, et convertible en table pour éviter le transport d'une table séparée.

À cet effet, la présente invention concerne un ensemble de cuisine portable comportant un poste fonctionnel, un couvercle et des pieds, le poste fonctionnel comprenant un compartiment de cuisson. Cet ensemble est remarquable en ce que le couvercle est articulé sur le poste fonctionnel et est apte à pivoter entre une position ouverte, permettant un accès audit poste fonctionnel, et une position fermée, permettant de fermer ledit poste fonctionnel et de former une surface sensiblement horizontale servant de table, en ce que le poste fonctionnel comprend au moins un compartiment de stockage et ou de rangement délimité par des cloisons intérieures, et en ce que les pieds sont amovibles ou rabattables.

Ainsi, l'ensemble de cuisine permet de préparer et de servir des plats cuisinés à partir d'aliments stockés dans ledit ensemble et en utilisant des moyens rangés dans ledit ensemble, tout en étant simplement transportable avec un encombrement moindre.

Avantageusement, le compartiment de cuisson comporte un dispositif de cuisson au gaz comportant un bruleur et une bouteille de gaz de type cartouche.

Selon un mode de réalisation avantageux, le compartiment de stockage et ou de rangement comporte un contenant hermétique.

Plus particulièrement, le contenant hermétique est isotherme.

Selon un mode de réalisation, le poste fonctionnel comprend un compartiment de stockage, comportant un sac ou une boite isotherme pour contenir des aliments frais, un premier compartiment de rangement pour ustensiles et vaisselle et un deuxième compartiment de rangement pourvu de logements conformés pour recevoir des contenants externes tels que des pots d'épices.

De façon avantageuse, le couvercle comporte, sur une face interne, une source d'alimentation électrique et un élément ou une combinaison d'éléments parmi un dispositif d'éclairage, au moins un bloc de stabilisation, limitant le mouvement de tout objet placé à l'intérieur du poste fonctionnel lorsque ledit couvercle est dans une position fermée, et une enceinte audio.

Plus particulièrement, la source d'alimentation électrique est une batterie rechargeable, le dispositif d'éclairage comporte une ampoule et ou une diode électroluminescente, ledit au moins un bloc de stabilisation est en mousse, et l'enceinte audio est une enceinte Bluetooth.

Avantageusement, le poste fonctionnel comporte en outre une tablette coulissante ou pliante faisant office de plan de travail supplémentaire.

Selon un mode de réalisation avantageux, les pieds sont amovibles et peuvent être rangés au niveau du couvercle, chaque pied étant tenu par des moyens d'attache de type clips.

Plus particulièrement, l'articulation entre le couvercle et le poste fonctionnel est réalisée par des moyens de type charnière.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif des modes de réalisations d'un ensemble de cuisine conforme aux principes de l'invention.

### BRÈVE DESCRIPTION DES FIGURES

Les figures ainsi que les éléments d'une même figure ne sont pas nécessairement à la même échelle. Sur l'ensemble des figures, les éléments identiques portent la même référence numérique.

Il est ainsi illustré en :
[Figure 1] : une vue en perspective d'un ensemble de cuisine en position ouverte selon l'invention ;
[Figure 2] : une vue en perspective de l'ensemble de cuisine en position fermée ;
[Figure 3] : une vue schématique du poste fonctionnel de l'ensemble de cuisine selon un mode de réalisation de l'invention ;
[Figure 4] : une vue schématique de la face interne du couvercle de l'ensemble de cuisine selon un mode de réalisation de l'invention ;
[Figure 5] : une vue en perspective de l'ensemble de cuisine avec la tablette déployée ;
[Figure 6] : une vue en perspective de l'ensemble de cuisine avec les pieds rangés selon un mode de réalisation de l'invention.

### DESCRIPTION DÉTAILLÉE DE MODES DE RÉALISATION

La terminologie employée dans la présente description ne doit en aucun cas être interprétée de manière limitative ou restrictive, simplement, parce qu'elle est employée en conjonction avec une description détaillée de certains modes de réalisation de l'invention.

Dans le mode de réalisation décrit ci-après, on fait référence à un ensemble de cuisine destiné principalement à une utilisation en plein air dans un contexte de loisir, que ce soit dans la nature, lors d'un pique-nique par exemple, ou dans une aire de repos, de camping, etc. ou même dans un espace extérieur d'une habitation telle qu'un patio ou une terrasse. Cet exemple non limitatif est donné pour une meilleure compréhension de l'invention et n'exclut pas une utilisation de celle-ci dans un contexte professionnel, sur un chantier par exemple.

Dans la suite de la description, le terme « cuisine » est employé pour désigner par extension un ensemble de cuisine.

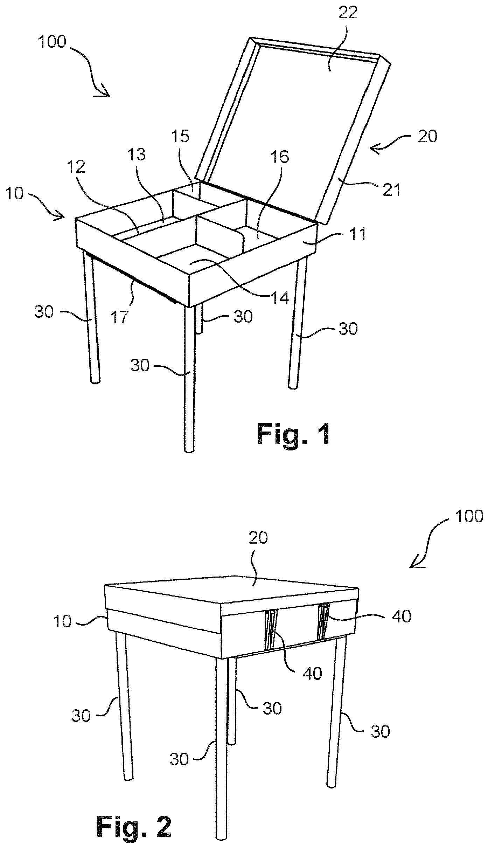

Les figures 1 et 2 représentent une cuisine 100 selon l'invention comprenant principalement un poste fonctionnel 10, un couvercle 20, articulé sur le poste fonctionnel et permettant de fermer celui-ci, et des pieds 30.

La cuisine 100 est représentée sur la figure 1 et sur la figure 2 respectivement dans une position ouverte et dans une position fermée. La position ouverte permet d'accéder au poste fonctionnel 10 tandis que la position fermée permet de convertir la cuisine 100 en table en ramenant la face externe du couvercle 20 à une position sensiblement horizontale. L'articulation en entre le poste fonctionnel 10 et le couvercle 20 est assurée par des moyens pivot 40 de type charnière visibles sur la figure 2.

Le poste fonctionnel 10, selon l'exemple de réalisation illustré, présente une forme générale parallélépipédique et comporte une paroi périphérique 11, surmontant un fond et définissant un volume intérieur utile, et des cloisons intérieures 12, divisant ledit volume intérieur en une pluralité de compartiments. Ainsi, le poste fonctionnel 10 comprend à titre d'exemple un compartiment de stockage 13, destiné à contenir des aliments frais et rapidement périssables, un premier compartiment de rangement 14, permettant de ranger les ustensiles et la vaisselle nécessaires, un deuxième compartiment de rangement 15, réservé aux condiments, épices et autres produits alimentaires de seconde nécessité, et un compartiment de cuisson 16 qui dispose des moyens nécessaires pour cuire ou faire chauffer des aliments cuisinés.

Le couvercle 20, selon l'exemple de réalisation illustré, présente une forme et des dimensions adaptées pour coopérer avec le poste fonctionnel 10 lors de l'ouverture et la fermeture de la cuisine 100, et comporte un rebord périphérique 21 entourant une face interne 22. Le rebord périphérique 21 vient affleurer la paroi périphérique 11 du poste fonctionnel 10 lorsque le couvercle 20 vient fermer ledit poste.

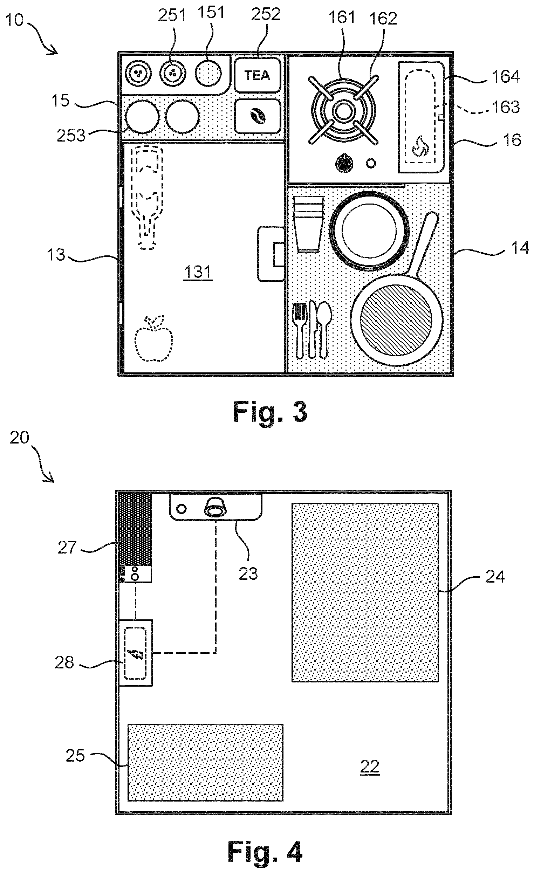

Sur la figure 1, les compartiments précités ainsi que la face interne du couvercle sont représentés sans leurs équipements. Chaque compartiment est caractérisé par des commodités spécifiques dont un exemple est donné en figure 3 et le couvercle 20 dispose d'équipements spécifiques dont un exemple est donné en figure 4.

La figure 3 donne un exemple d'équipements et d'aménagement possibles pour le poste fonctionnel 10.

Le compartiment de stockage 13, selon cet exemple, comporte une boite hermétique 131 pouvant être fixe ou amovible, pour permettre son nettoyage en dehors du poste fonctionnel 10, et dispose d'une capacité de stockage suffisante pour emporter une quantité de nourriture pour plusieurs personnes. La boite hermétique 131 peut également être isotherme ou, tout du moins, comporter une partie isotherme pour prolonger la température de certains aliments froids ou chaud. La boite hermétique 131 présente par exemple un couvercle articulé qui s'ouvre vers l'extérieur du poste fonctionnel 10 pour ne pas gêner l'accès aux autres compartiments dudit poste, et comprend des sous compartiments adaptés chacun à une catégorie ou une forme particulière d'aliments telle que les fruits et légumes en vrac, les bouteilles de différentes tailles, les aliments empilables comme les filets de viande de poisson, etc.

Le compartiment de stockage 13 peut, de façon alternative, comporter un sac hermétique qui s'ouvre et se ferme au moyen d'une fermeture éclair, ou tout autre contenant hermétique à condition qu'il s'adapte ergonomiquement à la forme et aux dimensions du compartiment de stockage 13.

Le premier compartiment de rangement 14, selon l'exemple de réalisation de la figure 3, est un espace entièrement vide dans lequel peuvent être placés et agencés différents ustensiles et objets de cuisine, et ce de façon totalement libre. Néanmoins, ce premier compartiment de rangement 14 peut comporter des cases conformées pour recevoir les ustensiles et objets de cuisine selon leurs formes et leurs dimensions.

Le deuxième compartiment de rangement 15, selon l'exemple de réalisation de la figure 3, présente des dimensions inférieures à celles du premier compartiment de rangement 14 et est donc plus adapté à contenir des objets tels que des petits contenants de formes variés pour épices, herbes, aliments en grains ou en poudre, et autres condiments. Par exemple, le deuxième compartiment 15 est destiné à recevoir des salières et moulins à poivre 251, des pots 252, des boites 253 de thé et de café, etc. À cet effet, le deuxième compartiment de rangement 15 est pourvu de logements 151 adaptés dans lesquels certains contenants peuvent être placés, ici, des salières et moulins à poivre 251.

Le compartiment de cuisson 16, selon l'exemple de réalisation de la figure 3, est un réchaud intégré, ledit réchaud est, préférablement, un réchaud au gaz et comporte en cela un bruleur 161 surmonté d'un support 162, formé de tringles en étoile par exemple, et une bouteille de gaz 162, également appelée cartouche à gaz, contenant un gaz liquéfié sous pression. La bouteille à gaz 163 est placée dans un emplacement dédié accessible via une trappe 164 pour faciliter son remplacement. En outre, le réchaud intégré 16 dispose d'un bouton d'allumage ainsi que d'une molette de réglage du débit de gaz dans le bruleur.

Accessoirement, le réchaud peut comporter une plaque de cuisson, de type plancha, adjacente au bruleur et un couvercle de protection pour au moins couvrir le bruleur en dehors de l'utilisation du réchaud afin d'éviter que les surfaces encore chaudes dudit bruleur ne soient au contact d'autres substances fuyant d'un autre compartiment lors du transport de la cuisine.

L'homme du métier comprendra aisément que le compartiment de cuisson 16 selon l'invention peut comporter tout autre dispositif de cuisson adapté au transport et apte à fournir l'autonomie nécessaire pour les temps de cuisson dont l'utilisateur a besoin.

De façon avantageuse, le couvercle 20 sert de pare-vent pour le compartiment de cuisson 16.

Le poste fonctionnel 10 peut comporter, outre les éléments précités, une glacière électrique, un réservoir d'eau débouchant sur un robinet périphérique pour différents usages (boisson, lavage des mains et de la vaisselle, rinçage), un compartiment supplémentaire de rangement pour les produits d'hygiène et/ou d'entretien, ainsi que tout autre élément de la vie quotidienne dont l'utilisation dans le contexte de l'invention peut se révéler nécessaire ou souhaitable.

Le couvercle 20 de la cuisine 100 peut, de la même façon que le poste fonctionnel 10, être équipé de divers moyens et dispositifs de commodité. La figure 4 en illustre un exemple.

En référence à cette figure, le couvercle 20 comporte au niveau de sa face interne 22 un dispositif d'éclairage 23, des blocs de stabilisation 24 et 25, une enceinte Bluetooth 27 et une source d'alimentation électrique 28.

Le dispositif d'éclairage 23 permet d'éclairer principalement le poste fonctionnel 10 et comporte par exemple une ampoule, réglable en orientation et en inclinaison pour une meilleure projection de la lumière sur le poste fonctionnel, et un bouton pour allumer et éteindre ladite ampoule. Le dispositif d'éclairage peut également être constitué de diodes électroluminescente (LED).

Les blocs de stabilisation 24 et 25 sont, de préférence, constitués de mousse et présentent des dimensions qui correspondent à celles des premier 14 et deuxième 15 compartiments de rangement respectivement, de sorte à venir bloquer les objets placés dans lesdits compartiments lorsque le couvercle 20 est en position fermée. Ainsi, les déplacements des objets placés dans les compartiments de rangement et les ouvertures intempestives de boites par exemple sont limités lors du transport de la cuisine 100.

De plus, les blocs de stabilisation présentent une épaisseur adéquate permettant de bien maintenir immobiles les objets susceptibles de se déplacer lors du transport de la cuisine et d'opposer une moindre résistance lors de la fermeture du couvercle 20.

De façon alternative, la face interne 22 du couvercle 20 peut être entièrement tapissée d'un bloc en mousse d'épaisseur déterminée.

La stabilisation des objets de la cuisine lors du transport de celle-ci peut également être obtenue par un bloc en mousse qu'on dépose sur le poste fonctionnel avant de rabattre le couvercle pour fermer la cuisine, et qu'on ôte avant chaque utilisation dudit poste.

L'enceinte Bluetooth 27 peut être fixée à demeure sur le couvercle 20 et permet par exemple de diffuser de la musique pendant le repas à partir d'un téléphone portable. L'enceinte dispose avantageusement d'une prise jack et d'un port USB pour établir des connections filaires.

La source d'alimentation électrique 28 est par exemple une batterie, fixe ou amovible, rechargeable assurant une distribution de l'énergie électrique à tout équipement électrique de la cuisine tel que le dispositif d'éclairage 23 et l'enceinte Bluetooth 27.

L'enceinte Bluetooth 27 peut être autonome, en disposant de sa propre batterie électrique, et amovible pour que l'utilisateur puisse s'en servir en la posant sur le couvercle 20 rabattu qui sert comme table. À cet effet, la face interne 22 du couvercle 20 peut comporter des moyens de fixation réglables en largeur, similaires aux supports de téléphones pour voiture, pour tenir fermement l'enceinte et tout autre appareil tel qu'un téléphone mobile ou une tablette.

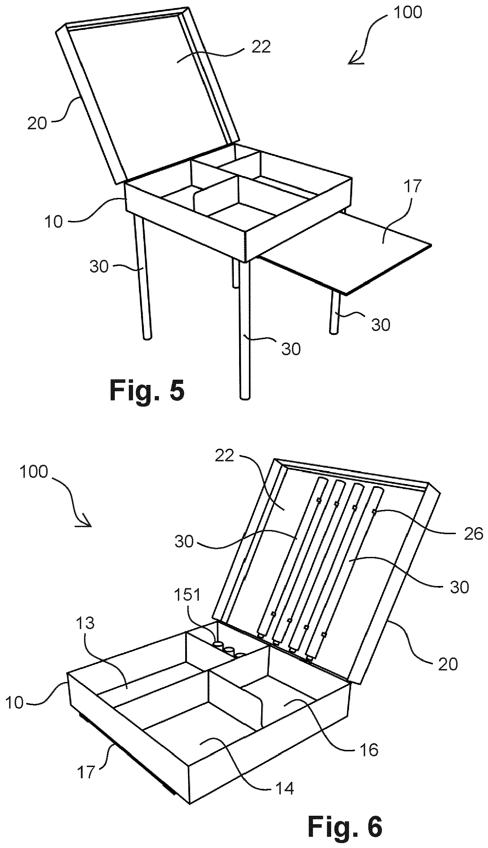

Le poste fonctionnel 10, selon l'exemple de réalisation illustré, est également équipé d'une tablette 17 coulissante visible sur la figure 5 dans une position de déploiement maximal, et sur la figure 1 dabs une position totalement rétractée. La tablette 17 permet de mettre à disposition de l'utilisateur un plan de travail supplémentaire lorsqu'il en éprouve le besoin.

La tablette 17 peut de façon alternative être déployée par repliement ou par tout autre mécanisme connu de l'homme du métier, et comporter un support vertical rabattable ou une clavette horizontale renforçant l'appui de ladite tablette.

Les pieds 30 de la cuisine 100, selon l'exemple de réalisation illustré, sont amovibles et se fixent au poste fonctionnel 10 via des ergots qu'on introduit dans des logements ménagés dans la face inférieure dudit poste, ces éléments n'étant pas représentés. Seuls les ergots sont visibles aux extrémités des pieds 30 sur la figure 6.

En référence à la figure 6, les pieds 30 peuvent être rangés sur la face interne 22 du couvercle 20, chaque pied se clipsant dans un couple de clips 26 en forme de crochets.

L'assemblage entre les pieds 30 et le poste de fixation peut être obtenu par des moyens conventionnels tels qu'un serrage, un vissage et/ou un engagement à force avec contrainte élastique résiduelle de serrage, un emboitage élastique ou de deux formes conjuguées de verrouillage. De plus, lorsqu'ils sont amovibles, les pieds 30 peuvent être rangés de différentes manières avec différents moyens au niveau du couvercle ou du poste fonctionnel.

De façon alternative, les pieds 30 peuvent être non amovibles mais simplement articulés, montés en ciseaux, pliants, télescopiques, etc.

La cuisine 100 selon l'invention comporte des éléments non représentés tels qu'une poignée ou un autre moyen d'appréhension et/ou une bandoulière, pour faciliter son transport par l'utilisateur, un filet extérieur attaché de préférence à la face inférieure du poste fonctionnel, pour ranger des objets de faible encombrement comme des livres et des magazines, un porte-parasol, un trou traversant le couvercle et le poste fonctionnel et permettant l'installation d'un parasol, et une ou plusieurs chaises pliantes.

Le poste fonctionnel 10, le couvercle 20 et pieds 30 de la cuisine 100 ainsi décrite peuvent être fabriqués par différents procédés connus de l'homme du métier tels que la fabrication additive (impression 3D), l'injection, le moulage, les procédés de menuiserie du bois ou de l'aluminium, etc., et ce dans différents matériaux parmi les métaux, les alliages métalliques, les polymères, les matériaux composites, les bois, etc.

Selon d'autres modes de réalisation, chaque élément de la cuisine peut présenter une forme et des dimensions quelconques à condition que l'ergonomie de ladite cuisine soit préservée conformément à l'invention.

Il ressort de la description de la présente invention que des éléments supplémentaires, usuels pour l'homme du métier, peuvent être ajoutés à l'ensemble de cuisine, et que certains éléments dudit ensemble peuvent être réalisés différemment sans pour autant sortir du cadre de l'invention.

## Revendications

1. Ensemble de cuisine (100) portable comportant un poste fonctionnel (10), un couvercle (20) et des pieds (30), le poste fonctionnel comprenant un compartiment de cuisson (16), **caractérisé en ce que** le couvercle (20) est articulé sur le poste fonctionnel et est apte à pivoter entre une position ouverte, permettant un accès audit poste fonctionnel, et une position fermée, permettant de fermer ledit poste fonctionnel et de former une surface sensiblement horizontale servant de table, **en ce que** le poste fonctionnel (10) comprend au moins un compartiment de stockage (13) et ou de rangement (14, 15) délimité par des cloisons intérieures (12), et **en ce que** les pieds (30) sont amovibles ou rabattables.

2. Ensemble de cuisine selon la revendication 1, dans lequel le compartiment de cuisson (16) comporte un dispositif de cuisson au gaz comportant un bruleur (161) et une bouteille de gaz (163) de type cartouche.

3. Ensemble de cuisine selon la revendication 1 ou la revendication 2, dans lequel ledit au moins un compartiment de stockage et ou de rangement comporte un contenant hermétique (131).

4. Ensemble de cuisine selon la revendication 3, dans lequel le contenant hermétique est isotherme.

5. Ensemble de cuisine selon l'une quelconque des revendications précédentes, dans lequel le poste fonctionnel (10) comprend un compartiment de stockage (13), comportant un sac ou une boite isotherme, un premier compartiment de rangement (14) et un deuxième compartiment de rangement (15) pourvu de logements (151) conformés pour recevoir des contenants externes (251).

6. Ensemble de cuisine selon l'une quelconque des revendications précédentes, dans lequel le couvercle (20) comporte, sur une face interne (22), une source d'alimentation électrique (28) et un élément ou une combinaison d'éléments parmi un dispositif d'éclairage (23), au moins un bloc de stabilisation (24, 25), limitant le mouvement de tout objet placé à l'intérieur du poste fonctionnel (10) lorsque ledit couvercle est dans une position fermée, et une enceinte audio (27).

7. Ensemble de cuisine selon la revendication 6, dans lequel la source d'alimentation électrique est une batterie rechargeable, le dispositif d'éclairage comporte une ampoule et ou une diode électroluminescente, ledit au moins un bloc de stabilisation est en mousse, et l'enceinte audio est une enceinte Bluetooth.

8. Ensemble de cuisine selon l'une quelconque des revendications précédentes, dans lequel le poste fonctionnel (10) comporte en outre une tablette (17) coulissante ou pliante.

9. Ensemble de cuisine selon l'une quelconque des revendications précédentes, dans lequel les pieds (30) sont amovibles et peuvent être rangés au niveau du couvercle (20), chaque pied étant tenu par des moyens d'attache (26).

10. Ensemble de cuisine selon l'une quelconque des revendications précédentes, dans lequel l'articulation entre le couvercle (20) et le poste fonctionnel (10) est réalisée par des moyens (40) de type charnière.
